# EUROPEAN PATENT APPLICATION

(11) **EP 4 282 654 A1**
(43) Date of publication of application: **29.11.2023**
(21) Application number: 22185959.8
(22) Date of filing: 20.07.2022
(51) Int. Cl.: B32B 27/36, B32B 21/00, B32B 5/18, B32B 7/12, B32B 21/08, B32B 27/06, B32B 27/08, B32B 27/18, B32B 27/30, B32B 29/00, B29C 48/07, B29C 48/21, B32B 7/02

(54) **COMPOSITE DECORATIVE BOARDS AND MANUFACTURING METHODS THEREOF**

(30) Priority: 26.05.2022 CN 202210582193
(71) Applicant: Zhejiang Yongyu Home Furnishings Co., Ltd., Huzhou, Zhejiang 313000 (CN)
(72) Inventor: Fu, Jiajin, Huzhou, 313000 (CN); Wang, Jinsong, Huzhou, 313000 (CN); Song, Jiangang, Huzhou, 31300 (CN); Wang, Yingbo, Huzhou, 313000 (CN)
(74) Representative: Wang, Bo

(57) **Abstract**

The present disclosure may provide a composite decoration board and a manufacturing method thereof. The composite decoration board may include a substrate layer. The substrate layer may include at least one first structural layer and a second structural layer. The at least one first structural layer may be connected to the second structural layer up and down. Ingredients of at least one first structural layer or the second structural layer may include poly(ethylene terephthalateco-1,4-cyclohexylenedimethylene terephthalate) (PETG) resin. A weight of the PETG resin of each first structural layer in the at least one first structural layer may be greater than a weight of the PETG resin of the second structural layer.

## Description

### CROSS-REFERENCE TO RELATED APPLICATIONS

This application claims priority to Chinese Patent Application No. 202210582193.0 filed on May 26, 2022, the entire contents of which are hereby incorporated by references.

### TECHNICAL FIELD

The present disclosure relates to the field of decorative board manufacturing technology, and in particular, to composite decorative boards and manufacturing methods thereof.

### BACKGROUND

The composite decorative board is very popular in the home decoration market with its changeable styles, rich patterns, complete functions, and easy cleaning characteristics. However, most of the decorative boards sold on the market are based on polyvinyl chloride (PVC), the PVC floor is difficult to degrade so as to easily form white pollution. The PVC floor has poor environmental protection performance since the PVC floor produces massive hydrogen chloride of pungent odors, carcinogens such as dioxin during combustion. At the same time, in order to reduce the cost, massive inorganic fillers are usually added to the PVC floor. The thermal stability of PVC material is poor, and the added inorganic fillers may increase brittleness of the PVC material. In addition, chlorinated polyvinyl chloride (CPE) additives are usually added to the PVC floor, which may reduce vicat softening temperature (VST) of the PVC floor, causing the PVC floor easy to warp, deform, fall off, or fracture of latch, reducing the service life of the PVC floor.

Therefore, it is necessary to provide a composite decorative board with environmental protection, high vicat softening temperature, good thermal stability, minor warpage deformation, and long service life.

### SUMMARY

One aspect of some embodiments of the present disclosure may provide a composite decorative board. The composite decorative board may include a substrate layer. The substrate layer may include at least one first structural layer and a second structural layer. The at least one first structural layer may be connected to the second structural layer up and down. Ingredients of the at least one first structural layer and the second structural layer may include poly(ethylene terephthalateco-1,4-cyclohexylenedimethylene terephthalate) (PETG) resin. A weight of the PETG resin of each first structural layer in the at least one first structural layer may be greater than a weight of the PETG resin of the second structural layer.

In some embodiments, the at least one first structural layer may include a first structural layer. The ingredients of the first structural layer may include 70-80 parts by weight of the PETG resin based on 103.1-133.5 parts by weight of the first structural layer. The ingredients of the second structural layer may include 13-18 parts by weight of the PETG resin based on 86.9-113 parts by weight of the second structural layer.

In some embodiments, a thickness of the first structural layer may be within a range of 0.10 millimeters-0.30 millimeters, and a thickness of the second structural layer may be within a range of 3 millimeters-8 millimeters.

In some embodiments, the at least one first structural layer may include two first structural layers and the second structural layer may be located between the two first structural layers. The ingredients of each first structural layer may include 18-31 parts by weight of the PETG resin based on 103.1-133.5 parts by weight of each first structural layer. The ingredients of the second structural layer may include 13-18 parts by weight of the PETG resin based on 86.9-113 parts by weight of the second structural layer.

In some embodiments, the two first structural layers may include a first structural layer (101) and a first structural layer (103). A thickness of the first structural layer (101) may be within a range of 0.8 millimeters -1.5 millimeters. A thickness of the first structural layer (103) may be within a range of 1.2 millimeters-2.0 millimeters. A thickness of the second structural layer may be within a range of 3 millimeters-8 millimeters.

In some embodiments, the composite decorative board may further include a decorative layer. The second structural layer may be located between the decorative layer and one first structural layer of the at least one first structural layer.

In some embodiments, a viscosity of the PETG resin may be within a range of 0.85 dL/g±0.015 dL/g.

In some embodiments, the ingredients of the PETG resin may include carboxyl-terminus, diethylene glycol, and water. A content of the terminal carboxyl group in the PETG resin may be less than or equal to 35 mol/ton. A content of the diethylene glycol in the PETG resin may be less than or equal to 1%. A content of the water in the PETG resin may be less than or equal to 0.4%.

In some embodiments, the ingredients of the at least one first structural layer or the second structural layer may further include a compatibilizer.

Another aspect of some embodiments of the present disclosure may provide a method for manufacturing a composite decorative board. The method may include preprocessing raw material of a first structural layer, preprocessing raw material of a second structural layer, obtaining a substrate by extruding the pre-processed raw material of the first structural layer and the pre-processed raw material of the second structural layer through a co-extrusion extruder, and obtaining a substrate layer by calendering the substrate and fixing a thickness of the substrate based on a calendering roller.

In some embodiments, the raw material of the first structural layer or the raw material of the second structural layer may include poly(ethylene terephthalateco-1,4-cyclohexylenedimethylene terephthalate) (PETG) resin. A weight of the PETG resin of the first structural layer may be greater than a weight of the PETG resin of the second structural layer.

In some embodiments, the raw material of the first structural layer may include 70-80 parts by weight of the PETG resin based on 103.1-133.5 parts by weight of the first structural layer. The raw material of the second structural layer may include 13-18 parts by weight of the PETG resin based on 86.9-113 parts by weight of the second structural layer.

In some embodiments, a thickness of the first structural layer may be within a range of 0.10 millimeters-0.30 millimeters. A thickness of the second structural layer may be within a range of 3 millimeters -8 millimeters.

In some embodiments, ingredients of the PETG resin may include carboxyl-terminus, diethylene glycol, and water. A content of the terminal carboxyl group in the PETG resin may be less than or equal to 35 mol/ton. A content of the diethylene glycol in the PETG resin may be less than or equal to 1%. A content of the water in the PETG resin may be less than or equal to 0.4%.

In some embodiments, the raw material of the first structural layer or the raw material of the second structural layer may further include a compatibilizer.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a sectional view of a substrate layer according to some embodiments of the present disclosure;
FIG. 2 is a sectional view of a substrate layer according to some embodiments of the present disclosure;
FIG. 3 is a sectional view of a composite decorative board according to some embodiments of the present disclosure;
FIG. 4 is a flowchart illustrating an exemplary process of a method for manufacturing a composite decorative board according to some embodiments of the present disclosure.

### DETAILED DESCRIPTION

In the following detailed description, numerous specific details are set forth by way of examples in order to provide a thorough understanding of the relevant disclosure. Obviously, drawings described below are only some examples or embodiments of the present disclosure. Those skilled in the art, without further creative efforts, may apply the present disclosure to other similar scenarios according to these drawings. It should be understood that the purposes of these illustrated embodiments are only provided to those skilled in the art to practice the application, and not intended to limit the scope of the present disclosure. Unless obviously obtained from the context or the context illustrates otherwise, the same numeral in the drawings refers to the same structure or operation.

It should be understood that in order to facilitate the description of this disclosure, positional relationship indicated by the terms "center", "upper surface", "lower surface", "upper", "lower", "top", "bottom", "inner", "outer", "axial", "radial", "peripheral", "external" and so on is based on positional relationship shown in the attached drawings, rather than indicating that device, component, or unit must have a specific positional relationship, which is not intended to limit the scope of the present disclosure. However, the terms may be displaced by another expression if they achieve the same purpose.

The terminology used herein is for the purposes of describing particular examples and embodiments only and is not intended to be limiting. As used herein, the singular forms "a," "an," and "the" may be intended to include the plural forms as well, unless the context clearly indicates otherwise. In general, the terms "comprise," "comprises," "comprising," "include," "includes," and/or "including," merely prompt to include steps and elements that have been clearly identified, and these steps and elements do not constitute an exclusive listing. The methods or devices may also include other steps or elements.

The flowcharts used in the present disclosure may illustrate operations executed by the system according to embodiments in the present disclosure. It should be understood that the preceding or following operations are not necessarily performed in the exact order. Conversely, the operations may be implemented in an inverted order, or simultaneously. Moreover, one or more other operations may be added to the flowcharts. One or more operations may be removed from the flowcharts.

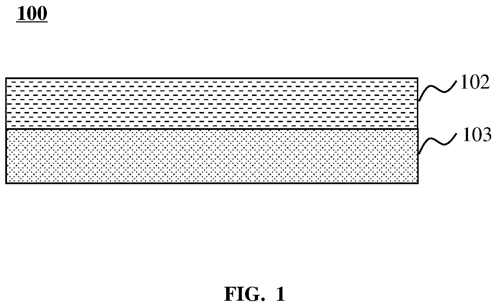

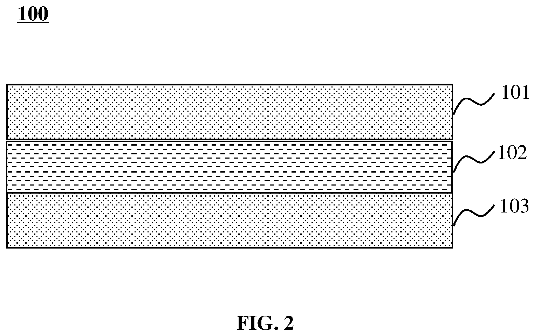

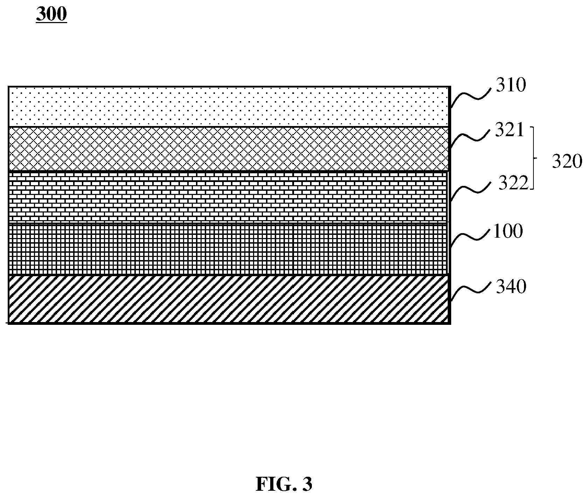

FIG. 1 is a sectional view of a substrate layer according to some embodiments of the present disclosure. FIG. 2 is a sectional view of a substrate layer according to some embodiments of the present disclosure. FIG. 3 is a sectional view of a composite decorative board according to some embodiments of the present disclosure. The composite decorative board may be described in detail below according to embodiments in combination with FIGs. 1- 3. It should be noted that the following embodiments are only used to illustrate the present disclosure and not intended to limit the scope of the present disclosure.

The composite decorative board may be a multi-layer floor. In some embodiments, the composite decorative board may include a substrate layer 100. In some embodiments, the substrate layer 100 may include at least one first structural layer and a second structural layer. The at least one first structural layer may be connected to the second structural layer up and down. In some embodiments, as shown in FIG. 1, the substrate layer 100 may include a first structural layer 103 and a second structural layer 102. The second structural layer 102 may be located on an upper layer of the first structural layer 103. In some embodiments, as shown in FIG. 2, the substrate layer 100 may include two first structural layers (for example, a first structural layer 101 and a first structural layer 103) and a second structural layer 102. The second structural layer 102 may be located between the first structural layer 101 and the first structural layer 103.

In some embodiments, two adjacent structural layers between the at least one first structural layer and the second structural layer may be closely adhered by hot pressing. In some embodiments, two adjacent structural layers between the at least one first structural layer and the second structural layer may be connected up and down by an adhesive. The adhesive refers to a substance that facilitate objects adhering to each other, for example, polylactic acid (PLA) resin, phenol-formaldehyde (PF) resin, etc.

In some embodiments, the first structural layer may be a structural layer that controls a stability of the composite decorative board. In some embodiments, the second structural layer may be a structural layer that controls a bending resistance and an impact resistance of the composite decorative board.

In some embodiments, as shown in FIG. 1, when the substrate layer 100 includes the first structural layer 103 and the second structural layer 102, the first structural layer 103 may be a balance layer and the second structural layer 102 may be a rigid layer. The balance layer may refer to a structural layer that controls balance of internal stress of the composite decorative board. The rigid layer may refer to a structural layer that controls the bending resistance and the impact resistance of the composite decorative board.

In some embodiments, as shown in FIG. 2, when the substrate layer 100 includes two first structural layers (the first structural layer 101 and the first structural layer 103) and the second structural layer 102, the first structural layer 101 may be an elastic layer, the first structural layer 103 may be a balance layer, and the second structural layer 102 may be a rigid layer. The elastic layer may refer to a structural layer that controls the stability of the composite decorative board through cooperating with the balance layer.

In some embodiments of the present disclosure, flatness, dimensional stability, and shrinkage resistance of the composite decorative board may be improved by setting the balance layer so as to effectively avoid warpage and deformation caused by a composite decorative layer.

In some embodiments, both the first structural layer and the second structural layer may be composed of various ingredients. Correspondingly, both the first structural layer and the second structural layer may include various ingredients. In some embodiments, ingredients of the first structural layer or the second structural layer may include poly(ethylene terephthalateco-1,4-cyclohexylenedimethylene terephthalate) (PETG) resin. A weight of the PETG resin of each first structural layer may be greater than a weight of the PEG resin of the second structural layer.

In some embodiments, the PETG resin is a transparent and amorphous copolyester. The PETG resin may be a product obtained by taking purified terephthalic acid (PTA) and ethylene glycol (MEG) as main raw material, adding a third monomer (e.g., 1,4-cyclohexanedimethanol (CHDM)), and reacting under action of a catalyst. The production process of the PETG resin includes two parts of esterification and polycondensation. Firstly, PTA, MEG, and the third monomer are esterified at high temperature to form a prepolymer, and then dihydric alcohol modified ethylene terephthalate is generated through polycondensation to obtain the PETG resin. Compared to polyethylene terephthalate (PET), the PETG resin has a 1,4-cyclohexanedimethanol comonomer in addition. Compared to poly(1,4-cyclohexylene dimethylene terephthalate) (PCT), the PETG resin has an ethylene glycol comonomer in addition.

In some embodiments of the present disclosure, by setting the substrate layer as a multi-layer structure and the ingredients of the at least one first structural layer or the second structural layer of the substrate layer including the PETG resin, the substrate layer may have high vicat softening temperature (VST), good temperature resistance, and minor warping and arching in the process of use. Vicat softening temperature refers to a temperature at which a sample of polymer (e.g., engineering plastics, general plastics, etc.) is pressed into 1 millimeter (mm) depth by a pressure needle of 1 mm² under a certain load and a constant heating condition in liquid heat transfer medium.

In some embodiments, the ingredients of the PETG resin may include carboxyl-terminus, diethylene glycol, and water. Carboxyl-terminus in the PETG resin of high content may reduce thermal stability of the material, diethylene glycol (by-reaction product of etherification) may reduce light resistance and heat resistance of the material, and excessive water may cause polyester degradation in the manufacturing of the composite decorative board. In some embodiments, the content of carboxyl-terminus in the PETG resin may be less than or equal to 35 mol/ton. The content of diethylene glycol in the PETG resin may be less than or equal to 1%. The content of water in the PETG resin may be less than or equal to 0.4%.

In some embodiments of the present disclosure, the thermal stability of the composite decorative board including the PETG resin may be improved by setting the content of carboxyl-terminus in the PETG resin less than or equal to 35 mol/ton. The light resistance and the thermal resistance of the composite decorative board including the PETG resin may be improved by setting the content of diethylene glycol in the PETG resin less than or equal to 1%. The polyester degradation in the manufacturing of the composite decorative board including the PETG resin may be reduced by setting the content of water in the PETG resin less than 0.4%.

In some embodiments, each of the first structural layers and the second structural layer may also be composed of other ingredients. In some embodiments, the ingredients of each of the first structural layers and the second structural layer may further include a compatibilizer.

The compatibilizer refers to an additive that may make polymers with great differences in solubility parameters compatibly blend. In some embodiments, the compatibilizer may be a maleic anhydride grafted compatibilizer. For example, the maleic anhydride grafted compatibilizer may be a maleic anhydride grafted ethylene acrylate copolymer.

In some embodiments, different types of compatibilizers in the substrate layer may influence performance of the composite decorative board. Specifically, it may be reflected by measuring the performance test results of the composite decorative board whose compatibilizer type is the maleic anhydride grafted compatibilizer in the substrate layer and the performance test results of the composite decorative board whose compatibilizer type is a maleic anhydride graft polyolefin elastomer in the substrate layer.

In the embodiment, the performance test results may include peel strength (bonding strength with a decorative layer), static bending strength, and breaking displacement. The static bending strength refers to a pressure strength that the composite decorative board bear when it is bent to fracture. The peel strength (bonding strength with the decorative layer) refers to a maximum force required to peel the decorative layer and the substrate layer bonded together from a contact surface per unit width. The breaking displacement refers to a displacement value of the composite decorative board during the whole process of bending to fracture.

The followings are the performance test results of the composite decorative board with the compatibilizer type of the maleic anhydride grafted compatibilizer in the substrate layer

(example) and the performance test results of the composite decorative board with the compatibilizer type of the maleic anhydride grafted polyolefin elastomer in the substrate layer (comparison):

| | example | comparison |
|---|---|---|
| peel strength (bonding strength with decorative layer) | left: 18N/25mm | left: 35N/25mm |
| | middle: 23N/25mm | middle: 37N/25mm |
| | right: 23N/25mm | right: 36N/25mm |
| static bending strength | 167 N | 189 N |
| breaking displacement | 3.7 mm | 6.6 mm |

As shown in the above table, "left: 18 N/25 mm, middle: 23 N/25 mm, right: 23 N/25 mm" refer to the peel strength of three points selected from the left, middle, and right in the width direction (transverse) of the composite decorative board with the compatibilizer type of the maleic anhydride grafted compatibilizer. "left: 35 N/ 25 mm, middle: 37 N/25 mm, right: 36 N/25 mm" refer to the peel strength of three points selected from the left, middle, and right in the width direction (transverse) of the composite decorative board with the compatibilizer type of the maleic anhydride grafted polyolefin elastomer. According to the above examples and comparison, it is further indicated that when the compatibilizer is the maleic anhydride grafted compatibilizer, the peel strength (bonding strength with a decorative layer) and the static bending strength/toughness are better than those of the maleic anhydride grafted polyolefin elastomer.

In some embodiments of the present disclosure, the compatibility between inorganic filler and organic resin in the substrate layer may be improved by selecting the maleic anhydride grafted compatibilizer, allowing the inorganic filler to maintain good dispersion in the substrate layer, so as to improve the tensile and impact strength of the composite decorative board. If the content of the compatibilizer in the substrate layer is high, the content of the resin in the substrate layer may be reduced to improve processing rheology, so as to improve the surface finish of the composite decorative board.

In some embodiments, the ingredients of the first structural layer and the second structural layer may also include at least one of an inorganic filler, a lubricating dispersant, a release agent, a toughening agent, a defoamer, or a flame retardant. In some embodiments, the lubricating dispersant may be a stearate lubricating dispersant. For example, the stearate lubricating dispersant may be pentaerythrityl tetrastearate (PETS). Since the PETS has good thermal stability, low volatility, good demoulding performance, and flow performance at high temperature, it has excellent nucleation and lubricating dispersion for the PETG resin, facilitating coating the inorganic filler by the PETG resin in the composite decorative board.

In some embodiments, different types of the lubricating dispersant in the substrate layer may affect the performance of the composite decorative board. Specifically, it may be reflected by measuring the performance test results of the composite decorative board whose type of the lubricating dispersant is the stearate lubricating dispersant in the substrate layer and the performance test results of the composite decorative board whose type of the lubricating dispersant is a long-chain fatty ester lubricating dispersant in the substrate layer.

In the embodiment, the performance test results may include material fluidity and a precipitate on a surface of the substrate. The material fluidity refers to a degree that the material reaches a flow state after heating in a barrel, and slides, melts, and adheres to each other to form a solution. The precipitate on the surface of the substrate refer to a processing additive precipitated on the surface of the substrate.

The followings are the performance test results of the composite decorative board with the stearate lubricating dispersant in the substrate layer (example) and the performance test results of the composite decorative board with the long-chain fatty ester lubricating dispersant in the substrate layer (comparison):

| | example | comparison |
|---|---|---|
| material fluidity | better | medium |
| precipitate on the surface of the substrate | no precipitate | slight precipitate |

According to the above example and comparison, it is further indicated that when the lubricating dispersant is the stearate lubricating dispersant, the material fluidity is better and the precipitate on the surface of the substrate is less than that when the lubricating dispersant is the long-chain fatty ester lubricating dispersant, and the nucleation and lubricating dispersion is excellent for the PETG resin, facilitating coating the inorganic filler by the PETG resin in composite decorative board.

In some embodiments, the release agent may be a montane wax, such as one or more OP wax, E wax, stearate, etc. In some embodiments, the release agent may be a stearate mixture. The stearate mixture may promote dispersion of a filler during the processing of the PETG resin, so as to improve the fluidity and demoulding effect of the filler. Therefore, when a large number of the inorganic filler needs to be added in the production of the substrate layer, the fluidity of the inorganic filler is poor in an extrusion process, the friction among the inorganic filler, a barrel, and a screw generates a large number of internal heat, resulting in increase of viscosity and decrease of the fluidity of formula material, which is manifested in adhering to a pipe and a mold to prevent the extrusion molding. The fluidity of material in the substrate layer may be improved and the peel strength between the material in the substrate layer and the metallic device may be improved by adding the release agent.

In some embodiments, the toughening agent may be a polyolefin elastomer. For example, the toughening agent may be an ethylene-ethyl acrylate (EEA) elastomer. The EEA elastomer has high thermal stability, low melting point, large filler inclusiveness, strong flexibility, large elasticity, good stress cracking resistance, good bending fatigue resistance, and low-temperature impact resistance, which may be used as a low-temperature impact modifier of the PETG resin to improve the low-temperature toughness and environmental stress cracking resistance of the PETG resin. Therefore, when a large number of the inorganic filler is added in the production process of the substrate layer, brittleness of the product is increased and toughness of the product is decreased, and the elastic modulus and the static bending strength of the product sharply decrease. The toughness of the composite decorative board may increase by adding the toughening agent.

In some embodiments, as shown in FIG. 1, when the substrate layer 100 includes the first structural layer 103 and the second structural layer 102, the ingredients of the first structural layer 103 may include 20-30 parts by weight of PET resin, 8-10 parts by weight of the defoamer, 5-10 parts by weight of the flame retardant, 0-3 parts by weight of the toughening agent, and 0.1-0.5 parts by weight of the lubricant in addition to 70-80 parts by weight of the PETG resin based on 103.1-133.5 parts by weight of the first structural layer 103. The ingredients of the second structural layer 102 may include 72-77 parts by weight of the inorganic filler, 1-3 parts by weight of the lubricating dispersant, 0.4-1.0 parts by weight of the release agent, 0-2 parts by weight of the toughening agent, 0.5-2.0 parts by weight of the compatibilizer, and 0-10 parts by weight of the flame retardant in addition to 13-18 parts by weight of the PETG resin based on 86.9-113 parts by weight of the second structural layer 102.

In some embodiments, as shown in FIG. 2, when the substrate layer 100 includes two first structural layers (for example, the first structural layer 101 and the first structural layer 103) and the second structural layer 102, the ingredients of the first structural layer 101 or the first structural layer 103 may include 61-72 parts by weight of the inorganic filler, 1-3 parts by weight of the lubricating dispersant, 0.4-1.0 parts by weight of the release agent, 1-3 parts by weight of the toughening agent, 0.3-1.0 parts by weight of the compatibilizer, and 0-10 parts by weight of the flame retardant in addition to 18-31 parts by weight of the PETG resin based on 81.7-121 parts by weight of the first structural layer 101 or the first structural layer 103. The ingredients of the second structural layer 102 may also include 72-77 parts by weight of the inorganic filler, 1-3 parts by weight of the lubricating dispersant, 0.4-1.0 parts by weight of the release agent, 0-2 parts by weight of the toughening agent, 0.5-2.0 parts by weight of the compatibilizer, and 0-10 parts by weight of the flame retardant in addition to 13-18 parts by weight of the PETG resin based on 86.9-113 parts by weight of the second structural layer 102. For example, the ingredients of each first structural layer may include 31 parts by weight of the PETG resin, 61 parts by weight of the inorganic filler, 1 part by weight of the lubricating dispersant, 0.4 parts by weight of the release agent, 1 part by weight of the toughening agent, 0.3 parts by weight of the compatibilizer, and 10 parts by weight of the flame retardant based on 104.7 parts by weight of first structural layer. The ingredients of the second structural layer 102 may include 13 parts by weight of the PETG resin, 77 parts by weight of the inorganic filler, 3 parts by weight of the lubricating dispersant, 1.0 parts by weight of the release agent, 2 parts by weight of the toughening agent, 2 parts by weight of the compatibilizer, and 10 parts by weight of the flame retardant based on 108 parts by weight of the second structural layer 102.

In some embodiments of the present disclosure, since the ingredients of the substrate layer do not include a halogen element, combustion does not generate a harmful substance such as hydrogen chloride, dioxin, etc., the composite decorative board made of the substrate layer has good environmental protection.

The molecular weight of polyester may be measured using the viscosity of the PETG resin. If the viscosity of the PETG resin is high, the toughness and mechanical property of the composite decorative board including the PETG resin are higher. If the viscosity of the PETG is too low, the toughness and mechanical strength of the composite decorative board including the PETG resin decrease. At the same time, the viscosity of the PETG resin may be not too high. If the viscosity of the PETG resin is too high, the PETG resin is not suitable for the production of the composite decorative board including the PETG resin. For example, it is not suitable to produce the composite decorative board including the PETG resin by the extrusion process. In some embodiments, the viscosity of the PETG resin may be within a range of 0.85 dL/g±0.015 dL/g.

The viscosity refers to a difficulty of the PETG resin flowing in a fluid or semi-fluid state.

In some embodiments of the present disclosure, the viscosity of the PETG resin is set within a range of 0.85 dL/g±0.015 dL/g, which ensures that requirements of mechanical strength and toughness of the composite decorative board including the PETG resin are met, and the mechanical strength and toughness is not too large, so as to facilitate the production of the composite decorative board including the PETG resin.

In some embodiments, when the composite decorative board 100 includes two first structural layers and a second structural layer, the PETG resin in each first structural layer and the second structural layer has different viscosity, which has different effects on the performance of the composite decorative board 100. Specifically, the specific effect of the viscosity of the PETG resin on the performance of the composite decorative board 100 may be reflected by following groups of performance test results.

In the embodiment, the performance test result may include a static bending strength and a breaking displacement of the composite decorative board 100 obtained based on a test standard of the composite decorative board 100. The static bending strength refers to a pressure strength that the composite decorative board can bear when it is bent to fracture. The breaking displacement refers to a displacement value of the composite decorative board during the whole process from bending to fracturing. The test standard refers to a preset test standard for testing the static bending strength or the breaking displacement of the composite decorative board. In some embodiments, the preset test standard may be set by those skilled in the art according to experience.

In the groups of experiments, a weight of each first structural layer is 104.7 parts by weight, and a weight of the second structural layer is 108 parts by weight. The ingredients of the two first structural layers (101, 103) and the second structural layer 102 in each group of corresponding composite decorative boards 100 may be set as be the same, respectively. For example, the ingredients of each first structural layer (101 or 103) is set as 31 parts by weight of the PETG resin, 61 parts by weight of the inorganic filler, 1 part by weight of the lubricating dispersant, 0.4 parts by weight of the release agent, 1 part by weight of the toughening agent, 0.3 parts by weight of the compatibilizer, and 10 parts by weight of the flame retardant. The ingredients of the second structural layer 102 is set as 13 parts by weight of the PETG resin, 77 parts by weight of the inorganic filler, 3 parts by weight of the lubricating dispersant, 1.0 parts by weight of the release agent, 2 parts by weight of the toughening agent, 2 parts by weight of the compatibilizer, and 10 parts by weight of the flame retardant. Meanwhile, the viscosity of the PETG resin in the two first structural layers (101, 103) and the second structural layer 102 in the same composite decorative board 100 is set as be the same, and the ingredients of the two first structural layers (101, 103) and the second structural layer 102 in each group is set that only the viscosity of the PETG resin is different as follows.

Example 1: the viscosity of the PETG resin in the two first structural layers (101 and 103) and the second structural layer 102 is 0.85 dL/g.

Example 2: the viscosity of the PETG resin in the two first structural layers (101 and 103) and the second structural layer 102 is 0.80 dL/g.

Example 3: the viscosity of the PETG resin in the two first structural layers (101 and 103) and the second structural layer 102 is 0.75 dL/g.

Finally, based on the fact that the thickness of each group of composite decorative boards 100 is 4.0 mm, the performance test results of the static bending strength and the breaking displacement of the composite decorative boards 100 obtained using the PETG resins with different viscosities in the above three examples are as follows:

| test item | test standard | composite decorative board of the present disclosure (thickness of 4.0 mm) | | |
|---|---|---|---|---|
| | | example 1 | example 2 | example 3 |
| static bending strength | preset test standard | 233 N | 188 N | 155 N |
| breaking displacement | preset test standard | 6.8 mm | 4.3 mm | 3.5 mm |

According to the above performance test results, when the first structural layer and the second structural layer have the same inorganic filler, the composite decorative board 100 performs superior in terms of the static bending strength and the breaking displacement by setting the viscosity of the PETG resin in each first structural layer with 104.7 parts by weight among the two first structural layer (101 or 103) and the second structural layer 102 with 108 parts by weight to 0.85 dL/g, which not only ensures the mechanical strength and toughness requirements of the composite decorative board including the PETG resin, but also makes the mechanical strength and toughness not too large, and is suitable for producing the composite decorative board including the PETG resin.

In some embodiments, the count of the first structural layers in the substrate layer 100 may affect the content of each ingredient in each first structural layer and the thickness of each first structural layer. The content of each ingredient in the first structural layer and the thickness of the first structural layer may affect the performance of the first structural layer, thereby affecting the performance of the entire composite decorative board. Therefore, when the substrate layer 100 includes different counts of the first structural layers, a corresponding content is determined for each ingredient in each first structural layer, and a corresponding thickness is determined for each first structural layer.

In some embodiments, as shown in FIG. 1, when the at least one first structural layer is one first structural layer 103, the ingredients of the first structural layer 103 may include 70-80 parts by weight of the PETG resin based on 103.1-133.5 parts by weight of the first structural layer 103. The ingredients of the second structural layer 102 may include 13-18 parts by weight of the PETG resin based on 86.9-113 parts by weight of the second structural layer 102. For example, the ingredients of the first structural layer 103 may include 70 parts by weight of the PETG resin based on 103.1 parts by weight of the first structural layer 103. The ingredients of the second structural layer 102 may include 13 parts by weight of the PETG resin based on 86.9 parts by weight of the second structural layer 102. As another example, the ingredients of the first structural layer 103 may include 80 parts by weight of the PETG resin based on 133.5 parts by weight of the first structural layer 103. The ingredients of the second structural layer 102 may include 18 parts by weight of the PETG resin based on 113 parts by weight of the second structural layer 102. As another example, the ingredients of the first structural layer 103 may include 75 parts by weight of the PETG resin based on 118.3 parts by weight of the first structural layer 103. The ingredients of the second structural layer 102 may include 15.5 parts by weight of the PETG resin based on 99.95 parts by weight of the second structural layer 102.

In some embodiments, as shown in FIG. 1, when the at least one first structural layer is a first structural layer 103, a thickness of the first structural layer 103 may be within a range of 0.10 mm-0.30 mm, and a thickness of the second structural layer 102 may be within a range of 3 mm-8 mm.

In some embodiments, when the composite decorative board 100 includes a first structural layer, a second structural layer, and a wear-resistant layer, the thickness of the composite decorative board may be obtained by summing the thickness of the first structural layer 103, the thickness of the second structural layer 102, and the thickness of the wear-resistant layer together. For example, the thickness of the composite decorative board may be obtained by summing the thickness of the first structural layer 103 with 104.7 parts by weight, the thickness of the second structural layer 102 with 108 parts by weight, and the thickness of the wear-resistant layer together. Different thicknesses of the composite decorative board 100 may have different effects on the performance of the composite decorative board 100. Specifically, specific effects of the thickness of the composite decorative board 100 on the performance of the composite decorative board 100 may be reflected by following groups of performance test results.

In the embodiment, the performance test results may include the thickness, weight of unit area, the static bending strength, room temperature warpage, a size change rate at 80 °C, and a heating warpage at 80 °C of the composite decorative board 100 obtained based on a test standard of the composite decorative board 100. The thickness refers to a distance between an upper surface and a lower surface of the composite decorative board. The weight of the unit area refers to a weight per a unit area of the composite decorative board. The static bending strength refers to a pressure strength that the composite decorative board can bear when it is bent to fracture under stress. The size change rate at 80 °C refers to a degree of size shrinkage or expansion of the object when the object recovers to 23°C±2 °C after being heated at 80 °C for 6 hours. The heating warpage at 80 °C refers to a degree of distortion of the object based on the plane when the object surface is heated at 80 °C. The room temperature warpage refers to a degree of distortion of the object based on the plane when the object is at 25 °C. The test standard refers to a preset test standard for detecting the thickness, the weight of unit area, the static bending strength, the room temperature warpage, the size change rate at 80 °C, and the heating warpage at 80 °C of the composite decorative board. The room temperature warpage, the size change rate at 80 °C, and the heating warpage at 80 °C may be tested according to the test standard of IS02399. The thickness, the weight of the unit area, and the static bending strength may be tested according to a preset test standard. In some embodiments, the preset test standard may be set by those skilled in the art according to experience.

In the groups of experiments, the ingredients of one of the first structural layer 103 and the second structural layer 102 in each group of corresponding composite decorative boards 100 may be set as the same. For example, the ingredients of the first structural layer 103 are set as 31 parts by weight of the PETG resin, 61 parts by weight of the inorganic filler, 1 part by weight of the lubricating dispersant, 0.4 parts by weight of the release agent, 1 part by weight of the toughening agent, 0.3 parts by weight of the compatibilizer, and 10 parts by weight of the flame retardant. The ingredients of the second structural layer 102 are set as 13 parts by weight of the PETG resin, 77 parts by weight of the inorganic filler, 3 parts by weight of the lubricating dispersant, 1.0 parts by weight of the release agent, 2 parts by weight of the toughening agent, 2 parts by weight of the compatibilizer, and 10 parts by weight of the flame retardant. Meanwhile, the first structural layer 103, the second structural layer 102, and the wear-resistant layer of each group are set that only the thicknesses of some layers are different as follows.
Example 1: the thickness of the first structural layer is set as 0.10 mm, the thickness of the second structural layer is set as 3.0 mm, and the thickness of the wear-resistant layer is set as 0.2 mm.
Example 2: the thickness of the first structural layer is set as 0.10 mm, the thickness of the second structural layer is set as 5.0 mm, and the thickness of the wear-resistant layer is set as 0.2 mm.
Example 3: the thickness of the first structural layer is set as 0.10 mm, the thickness of the second structural layer is set as 8.0 mm, and the thickness of the wear-resistant layer is set as 0.2 mm.
Example 4: the thickness of the first structural layer is set as 0.20 mm, the thickness of the second structural layer is set as 3.0 mm, and the thickness of the wear-resistant layer is set as 0.2 mm.
Example 5: the thickness of the first structural layer is set as 0.30 mm, the thickness of the second structural layer is set as 3.0 mm, and the thickness of the wear-resistant layer is set as 0.2 mm.
Example 6: the thickness of the first structural layer is set as 0.10 mm, the thickness of the second structural layer is set as 3.0 mm, and the thickness of the wear-resistant layer is set as 0.1 mm.
Example 7: the thickness of the first structural layer is set as 0.10 mm, the thickness of the second structural layer is set as 3.0 mm, and the thickness of the wear-resistant layer is set as 0.3 mm.
Example 8: the thickness of the first structural layer is set as 0.20 mm, the thickness of the second structural layer is set as 3.0 mm, and the thickness of the wear-resistant layer is set as 0.1 mm.
Example 9: the thickness of the first structural layer is set as 0.30 mm, the thickness of the second structural layer is set as 3.0 mm, and the thickness of the wear-resistant layer is set as 0.1 mm.
Example 10: the thickness of the first structural layer is set as 0.30 mm, the thickness of the second structural layer is set as 3.0 mm, and the thickness of the wear-resistant layer is set as 0.3 mm.
Example 11: the thickness of the first structural layer is set as 0.20 mm, the thickness of the second structural layer is set as 3.0 mm, and the thickness of the wear-resistant layer is set as 0.3 mm.

Finally, the performance test results of the thickness, the weight of unit area, the static bending strength, the room temperature warpage, the size change rate at 80 °C, and heating warpage at 80 °C of the composite decorative board 100 obtained using the above 11 examples with different thicknesses of some layers may be as follows:

| test item | test standard | example 1 | example 2 | example 3 | | | | | | |
|---|---|---|---|---|---|---|---|---|---|---|
| thickness | preset test standard | 3.30 mm | 5.30 mm | 8.30 mm | | | | | | |
| weight of unit area | preset test standard | 6.27 kg/m² | 10.07 kg/m² | 15.77 kg/m² | | | | | | |
| static bending strength | preset test standard | 105 N | 256 N | 334 N | | | | | | |
| room temperature warpage | IS02399 | 0.60 mm | 0.4 mm | 0.25 mm | | | | | | |

| test item | test stand ard | examp le 1 | exampl e4 | exampl e5 | exam ple 6 | exampl e 7 | examp le 8 | exa mpl e9 | exam ple 10 | exam ple 11 |
|---|---|---|---|---|---|---|---|---|---|---|
| size change rate at 80 °C | IS02 399 | 0.17% | 0.13% | 0.03% | 0.10 % | 0.20% | 0.05% | 0.07 % | 0.15 % | 0.19 % |
| heating warpage at 80 °C | IS02 399 | 0.80m m | 0.65 mm | 0.2 mm | 0.68 mm | 1.30 mm | 0.25 mm | 0.50 mm | 0.68 mm | 0.80 mm |
| room temperatu re warpage | IS02 399 | 0.60 mm | 0.40 mm | 0.10 mm | 0.40 mm | 0.80 mm | 0.20 mm | 0.30 mm | 0.45 mm | 0.60 mm |

According to the above performance test results, the thicker the thickness of the composite decorative board 100 including the PETG resin is, the stronger the bending resistance is, and the better the structural flatness is. It can be seen from examples 1-3 that when the thickness of the first structural layer is set as 0.1 mm, the thickness of the second structural layer is set as 8.0 mm, and the thickness of the wear-resistant layer is set as 0.2 mm, the composite decorative board 100 performs superior in thickness, the weight of unit area, and the static bending strength. The wear-resistant layer of different thicknesses requires the first structural layer of different thicknesses to match. The range that the thickness of each first structural layer is greater than the thickness of the wear-resistant layer is 0.05 mm-0.15 mm, which is the best range, so as to ensure the structural stability of the composite decorative board. The thicker the wear-resistant layer is, the worse the stability of the composite decorative board is, and the larger the size change rate and warpage of the composite decorative board are. It can be seen from examples 6 and 7 that the thickness of the wear-resistant layer in example 7 is larger, and the composite decorative board 100 has larger values in terms of the room temperature warpage, the size change rate at 80 °C, and the heating warpage at 80 °C.

In some embodiments, as shown in FIG. 2, when the at least one first structural layer includes two first structural layers (101 and 103) and the second structural layer 102 is located between the two first structural layers (101 and 103), the ingredients of each first structural layer may include 18-31 parts by weight of the PETG resin based on 81.7-121 parts by weight of each first structural layer, and the ingredients of the second structural layer may include 13-18 parts by weight of the PETG resin based on 86.9-113 parts by weight of the second structural layer. For example, the ingredients of each first structural layer may include 18 parts by weight of the PETG resin based on 81.7 parts by weight of each first structural layer, and the ingredients of the second structural layer may include 13 parts by weight of the PETG resin based on 86.9 parts by weight of the second structural layer. As another example, the ingredients of each first structural layer may include 31 parts by weight of the PETG resin based on 121 parts by weight of each first structural layer, and the ingredients of the second structural layer may include 18 parts by weight of the PETG resin based on 113 parts by weight of the second structural layer. As another example, the ingredients of each first structural layer may include 24.5 parts by weight of the PETG resin based on 101.35 parts by weight of each first structural layer, and the ingredients of the second structural layer may include 15.5 parts by weight of the PETG resin based on 99.95 parts by weight of the second structural layer.

In some embodiments, when the composite decorative board 100 includes two first structural layers (101 and 103) and a second structural layer 102, different contents of the PETG resin in each first structural layer have different effects on the performance of the composite decorative board 100. Specifically, specific effects of the content of the PETG resin included in each first structural layer on the performance of the composite decorative board 100 may be reflected by the following groups of performance test results.

In this embodiment, the performance test results may include the static bending strength, the breaking displacement, and the peel strength between the substrate layer and the decorative layer of the composite decorative board 100 obtained based on the test standard of the composite decorative board 100. The static bending strength refers to the pressure strength that the composite decorative board can bear when it is bent to fracture. The breaking displacement refers to a displacement value of the composite decorative board during the whole process from bending to fracturing. The peel strength between the substrate layer and the decorative layer refers to a maximum force required to peel the substrate layer and the decorative layer bonded together from the contact surface per unit width. The test standard refers to the preset test standard for testing the static bending strength, the breaking displacement, and the peel strength between the substrate layer and the decorative layer of the composite decorative board. The test standard for the peel strength between the substrate layer and the decorative layer may be the test standard of ASTM D903. The static bending strength and the breaking displacement may be tested with a preset test standard. In some embodiments, the preset test standard may be set by those skilled in the art according to experience.

In the groups of experiments, the ingredients of each first structural layer other than the PETG resin and the ingredients of the second structural layer 102 in each group of corresponding composite decorative board 100 may be set as the same. For example, the ingredients of the first structural layer other than the PETG resin are set as 61 parts by weight of the inorganic filler, 1 part by weight of the lubricating dispersant, 0.4 parts by weight of the release agent, 1 part by weight of the toughening agent, 0.3 parts by weight of the compatibilizer, and 10 parts by weight of the flame retardant. The ingredients of the second structural layer 102 are set as 13 parts by weight of the PETG resin, 77 parts by weight of the inorganic filler, 3 parts by weight of the lubricating dispersant, 1.0 parts by weight of the release agent, 2 parts by weight of the toughening agent, 2 parts by weight of the compatibilizer, and 10 parts by weight of the flame retardant. Meanwhile, the ingredients of each first structural layer of each group are set that only the content of the PETG resin is different as follows.
Example 1: the content of the PETG resin in each first structural layer is set as 31 parts by weight.
Example 2: the content of the PETG resin in each first structural layer is set as 24 parts by weight.
Example 3: the content of the PETG resin in each first structural layer is set as 18 parts by weight.

Finally, the performance test results of the static bending strength, the breaking displacement, and the peel strength between the substrate layer and the decorative layer of the composite decorative board 100 obtained using the above three examples to set the content of the PETG resin in the different first structural layers are as follows:

| test item | test standard | example 1 | example 2 | example 3 |
|---|---|---|---|---|
| peel strength between the substrate layer and the decorative layer | ASTM D903 | 56N/25mm | 35N/25mm | 20N/25mm |
| static bending strength | preset test standard | 127 N | 165 N | 190 N |
| breaking displacement | preset test standard | 8.2 mm | 5.6 mm | 3.2 mm |

According to the above performance test results, the higher the content of the PETG resin is, the better the peel strength between the PETG resin and the decorative layer is, which may effectively ensure that the decorative layer may not fall off during the usage of the product. However, the higher the content of PETG resin is, the lower the bending resistance is, which may cause the light resistance to reduce during the usage of the product. When the content of the PETG resin of each first structural layer is set as 31 parts by weight, the peel strength between the substrate layer and the decorative layer is superior, which may effectively ensure that the decorative layer of the composite decorative board does not fall off during usage of the product. However, the higher the content of the PETG resin is, the weaker the static bending strength is, the weaker the bending resistance is, which causes the light resistance to reduce during the usage of the product. Therefore, considering the static bending strength, the breaking displacement, and the peel strength between the substrate layer and the decorative layer of the composite decorative board 100, in examples 1-3, it is optimal to set the content of the PETG resin of each first structural layer as 24 parts by weight.

In some embodiments, when the composite decorative board 100 includes two first structural layers (101 and 103) and a second structural layer 102, different contents of the PETG resin in the second structural layer have differently effects on the performance of the composite decorative board 100. Specifically, specific effects of the content of the PETG resin included in the second structural layer on the performance of the composite decorative board 100 may be reflected by the following groups of performance test results.

In this embodiment, the performance test results may include the plasticization degree/fluidity of a material, the static bending strength, and the breaking displacement of the composite decorative board 100 obtained based on the test standard of the composite decorative board 100. The degree of plasticization/fluidity of the material refers to a degree of relative sliding, melting, and mutual adhesion of material to form a solution when the material reaches a flowing state after heating in the barrel. The static bending strength refers to a pressure strength that the composite decorative board can bear when it is bent to fracture under stress. The breaking displacement refers to a displacement value of the composite decorative board during the whole process from bending to fracturing. The test standard refers to a preset test standard for testing the plasticization degree/fluidity of the material, the static bending strength, and the breaking displacement of composite decorative board. The plasticization degree/fluidity of material, the static bending strength, and the breaking displacement may be tested by preset test standards. In some embodiments, the preset test standards may be set by those skilled in the art according to experience.

In the groups of experiments, the ingredients of the second structural layer other than the PETG resin in each group of composite decorative board 100 may be set to be the same, and the ingredients of the two first structural layers may be set to be the same. For example, the ingredients of each first structural layer are set as 24 parts by weight of the PETG resin, 61 parts by weight of the inorganic filler, 1 part by weight of the lubricating dispersant, 0.4 parts by weight of the release agent, 1 part by weight of the toughening agent, 0.3 parts by weight of the compatibilizer, and 10 parts by weight of the flame retardant. Other ingredients of the second structural layer other than the PETG resin are set as 77 parts by weight of the inorganic filler, 3 parts by weight of the lubricating dispersant, 1.0 parts by weight of the release agent, 2 parts by weight of the toughening agent, 2 parts by weight of the compatibilizer, and 10 parts by weight of the flame retardant. Meanwhile, the ingredients of the second structural layer of each group are set that only the content of the PETG resin is different as follows:
Example 1: the content of the PETG resin in the second structural layer is set as 13 parts by weight.
Example 2: the content of the PETG resin in the second structural layer is set as 15 parts by weight.
Example 3: the content of the PETG resin in the second structural layer is set as 18 parts by weight.

Finally, the performance test results of the plasticization degree/fluidity of material, the static bending strength, and the breaking displacement of the composite decorative board 100 obtained using the above three examples to set the content of the PETG resin in different second structural layers are as follows:

| test item | test standard | example 1 | example 2 | example 3 |
|---|---|---|---|---|
| plasticization degree/fluidity of material | preset test standard | medium | good | excellent |
| static bending strength | preset test standard | 165 N | 155 N | 140 N |
| breaking displacement | preset test standard | 5.6 mm | 6.0 mm | 6.5 mm |

According to the performance test results of the above examples 1-3, the higher the content of the resin of the second structural layer is, the better the fluidity of the material is, and the better the plasticization degree/fluidity of the material is, the higher the inorganic filler is, the worse the fluidity and dispersion of the material are, so the amount of processing aids needs to be further increased.

In some embodiments, as shown in FIG. 2, when the at least one first structural layer includes two first structural layers and the second structural layer is located between the two first structural layers, the two first structural layers may include the first structural layer 101 and the first structural layer 103. The thickness of the first structural layer 101 may be within a range of 0.8 mm-1.5 mm. The thickness of the first structural layer 103 is within a range of 1.2 mm-2.0 mm. The thickness of the second structural layer is within a range of 3 mm-8 mm.

In some embodiments, when the composite decorative board 100 includes two first structural layers, a second structural layer, and a wear-resistant layer, the weight of each first structural layer (101 or 103) is 104.7 parts by weight, and the weight of the second structural layer is 108 parts by weight, different thicknesses of the two first structural layers have different effects on the performance of the composite decorative board 100 if the thickness of the second structural layer of the composite decorative board 100 remains unchanged. Specifically, under the condition that the thickness of the second structural layer of the composite decorative board 100 remains unchanged, specific effects of the thickness of the two first structural layers on the performance of the composite decorative board 100 may be reflected by the following groups of performance test results.

In this embodiment, the performance test results may include the size change rate at 80 °C, the heating warpage at 80 °C, the room temperature warpage, and the size change rate at - 18 °C of the composite decorative board 100 obtained based on the test standards of the composite decorative board 100. The size change rate at 80 °C refers to the degree of size shrinkage or expansion of the object when the object recovers to 23 °C±2 °C after being heated at 80 °C for 6 hours. The heating warpage at 80 °C refers to the degree of distortion of the object based on the plane when the object surface is heated at 80 °C. The room temperature warpage refers to the degree of distortion of the object based on the plane when the object is at 25 °C. The size change rate at -18 °C refers to the degree of size shrinkage or expansion of the object when it is recovered to 12 h at -18 °C for 6 hours. The test standard refers to a preset test standard used to test the size change rate at 80 °C, the heating warpage at 80 °C, the room temperature warpage, and the size change rate at -18 °C of the composite decorative board. The size change rate at 80 °C, the heating warpage at 80 °C, the room temperature warpage, and the size change rate at -18 °C may be tested according to the test standard of IS02399.

In the groups of experiments, the ingredients of the two first structural layers (101, 103) and the second structural layer 102 in each group of composite decorative board 100 may be set to be the same. For example, the ingredients of each first structural layer (101 or 103) are set as 31 parts by weight of the PETG resin, 61 parts by weight of the inorganic filler, 1 part by weight of the lubricating dispersant, 0.4 parts by weight of the release agent, 1 part by weight of the toughening agent, 0.3 parts by weight of the compatibilizer, and 10 parts by weight of the flame retardant. The ingredients of the second structural layer 102 are set as 13 parts by weight of the PETG resin, 77 parts by weight of the inorganic filler, 3 parts by weight of the lubricating dispersant, 1.0 parts by weight of the release agent, 2 parts by weight of the toughening agent, 2 parts by weight of the compatibilizer, and 10 parts by weight of the flame retardant. Meanwhile, the thickness of the second structural layer 102 in each group of composite decorative board 100 is set to be the same, and the two first structural layers (101, 103) and the wear-resistant layer in each group are set that only thicknesses of some layers are different as follows.

Example 1: the thickness of the first structural layer 101 is set as 0.8 mm, the thickness of the second structural layer 102 is set as 3 mm, and the thickness of the first structural layer 103 is set as 1.2 mm, and the thickness of the wear-resistant layer is set as 0.2 mm.

Example 2: the thickness of the first structural layer 101 is set as 0.8 mm, the thickness of the second structural layer 102 is set as 3 mm, and the thickness of the first structural layer 103 is set as 1.6 mm, and the thickness of the wear-resistant layer is set as 0.2 mm.

Example 3: the thickness of the first structural layer 101 is set as 0.8 mm, the thickness of the second structural layer 102 is set as 3 mm, and the thickness of the first structural layer 103 is set as 2.0 mm, and the thickness of the wear-resistant layer is set as 0.2 mm.

Example 4: the thickness of the first structural layer 101 is set as 1.2 mm, the thickness of the second structural layer 102 is set as 3 mm, and the thickness of the first structural layer 103 is set as 1.2 mm, and the thickness of the wear-resistant layer is set as 0.2 mm.

Example 5: the thickness of the first structural layer 101 is set as 1.5 mm, the thickness of the second structural layer 102 is set as 3 mm, and the thickness of the first structural layer 103 is set as 1.2 mm, and the thickness of the wear-resistant layer is set as 0.2 mm.

Finally, the performance test results of the size change rate at 80 °C, the heating warpage at 80 °C, the room temperature warpage, and size change rate at -18 °C of the composite decorative board 100 obtained using the above five embodiments, in which the thickness of the second structural layer 102 and the thickness of the wear-resistant layer are set to be the same, and the thickness of the two first structural layers (101, 103) of each group is set to be different, are as follows:

| test item | test standard | example 1 | example 2 | example 3 | example 4 | example 5 |
|---|---|---|---|---|---|---|
| size change rate at 80 °C | ISO2399 | 0.05% | 0.09% | 0.15% | 0.11% | 0.21% |
| heating warpage at 80 °C | ISO2399 | 0.30 mm | 0.50 mm | 0.80 mm | 1.0 mm | 1.5 mm |
| room warpage | ISO2399 | 0.10 mm | 0.30 mm | 0.6 mm | 0.7 mm | 1.0 mm |
| size change rate at -18 °C | ISO2399 | 0.06% | 0.10% | 0.13% | 0.13% | 0.17% |

According to the above performance test results, when the thickness of the second structural layer remains unchanged, different thicknesses of the first structural layers (101, 103) have effects on the stability of the product structure. Specifically, it can be seen from examples 1-5 that when the thickness of the first structural layer 101 is set as 0.8 mm, the thickness of the first structural layer 103 is set as 1.2 mm, the thickness of the second structural layer 102 is set as 3 mm, and the thickness of the wear-resistant layer is set as 0.2 mm, the composite decorative board 100 performs superior in terms of the size change rate at 80 °C, the heating warpage at 80 °C, the room temperature warpage, and the size change rate at -18 °C, which ensures the structural stability of the composite decorative board. Meanwhile, it can be seen from examples 1-5 that the thickness matching of the balance layer and the first structural layer 101 is different under different total thicknesses of the composite decorative board. The thickness of the first structural layer (101, 103) only needs to match the thickness of the wear-resistant layer. When the total thicknesses increase and the thickness of the second structural layer remains unchanged, the stability of the product structure may become worse.

FIG. 3 is a sectional view of a composite decorative board according to some embodiments of the present disclosure.

In some embodiments, in addition to the substrate layer 100, the composite decorative board may include a decorative layer 320 located above the substrate layer 100. In some embodiments, as shown in FIG. 1, when the substrate layer 100 includes a first structural layer 103 and a second structural layer 102, the second structural layer 102 may be located between the decorative layer 320 and the first structural layer 103.

The decorative layer refers to a structural layer used to decorate the composite decorative board. In some embodiments, the decorative layer may be a single-layer structure. For example, when the decorative layer is a single-layer structure, the decorative layer may be any one of wood skin, bamboo skin, melamine impregnated paper, etc.

In some embodiments, the decorative layer may be a two-layer structure, which may include a wear-resistant layer 321 and a color film layer 322. The wear-resistant layer may be a structural layer to reduce mechanical wear. The color film layer may be a structure layer of the decorative layer in the composite decorative board, which may provide color, pattern, and other effects.

In some embodiments, when the decorative layer is a two-layer structure, the ingredients of the decorative layer may include the PETG resin.

In some embodiments of the present disclosure, since the ingredients of the decorative layer include the PETG resin, the decorative layer has a high vicat softening temperature and good temperature resistance, and no warping and arching problems occur during the usage of the product.

In some embodiments, the composite decorative board may also include an ultraviolet (UV) coating layer 310 (such as a polyurethane UV curing coating layer) and a silent layer 340. The UV coating layer 310 may be located above the decorative layer 320. The silent layer 340 may be located below the substrate layer 100.

The UV coating layer 310 may be used to control the surface gloss of the composite decorative board and improve the scratch resistance on a surface of the composite decorative board. In some embodiments, the UV coating layer 310 may include a substance such as acrylic ester.

The silent layer 340 may be a structural layer that reduces mechanical wear. In some embodiments, the silent layer 340 may be any one of an ethylene-vinyl acetate (EVA) silent pad, an irradiation crosslinked polyethylene foam (IXPE) silent pad, a cork pad, etc.

In some embodiments, two adjacent structural layers in the UV coating layer 310, the decorative layer 320, the substrate layer 100, and the silent layer 340 may be connected in various ways, such as adhesives or hot pressing. It is understandable that the connection ways between different adjacent structural layers may be the same or different.

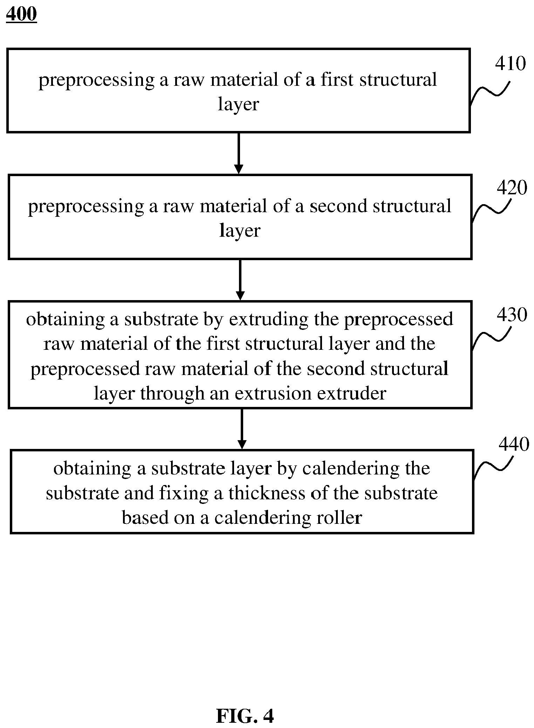

FIG. 4 is a flowchart illustrating an exemplary process of a method for manufacturing a composite decorative board according to some embodiments of the present disclosure.

In step 410, a raw material of the first structural layer may be preprocessed.

In some embodiments, the raw material of the first structural layer may be the ingredients of the first structural layer. More descriptions regarding the raw material of the first structural layer may be found elsewhere in the present disclosure, e.g., FIG. 1 and relevant descriptions thereof.

The preprocessing refers to one or more treatments of the raw material. For example, the preprocessing may be one or more of cooling the raw material of the first structural layer, heating the raw material of the first structural layer, stirring and mixing the raw material of the first structural layer of a high speed, etc.

In some embodiments, the preprocessing of the raw material of the first structural layer may include adding the raw material of the first structural layer into a high-speed mixer for evenly mixing, after the temperature rises to 120 °C by mixing, transporting the mixed raw material to a low-speed mixer for cooling to 50 °C, and then putting the mixed raw material into a discharge tank to obtain the preprocessed raw material of the first structural layer (also referred to as a first charge mixture).

In step 420, a raw material of the second structural layer may be preprocessed.

In some embodiments, the raw material of the second structural layer 102 may be the ingredients of the second structural layer 102. More descriptions regarding the raw material of the second structural layer may be found elsewhere in the present disclosure, e.g., FIG. 1 and relevant descriptions thereof.

In some embodiments, the preprocessing of the raw material of the second structural layer may include adding the raw material of the second structural layer into a high-speed mixer for evenly mixing, after the temperature rises to 120 °C by mixing, transporting the mixed raw material to a low-speed mixer for cooling to 50 °C, and then putting the mixed raw material into a discharge tank to obtain the preprocessed raw material of the second structural layer (also referred to as a second charge mixture).

In step 430, a substrate may be obtained by extruding the preprocessed raw material of the first structural layer and the preprocessed raw material of the second structural layer through an extruder. In some embodiments, the extruder may include a co-extrusion extruder.

The extruder refers to a device that makes, through an extrusion mold, the heated plastic raw material in a viscous flow state form a material with a cross-section similar to a shape of the extrusion mold. The co-extrusion extruder may include a main extruder, an auxiliary extruder, a blanking device, a programmable logic controller (PLC) system, a distributor, and a mode with a channel with a section shape. The blanking device may be arranged on the main extruder. The main extruder may be connected with the distributor through a confluent core channel. The auxiliary extruder may be connected with the distributor through the confluent core channel. The distributor may be connected with the mode. The PLC system may be used to control an operation of the extruder and a supporting device thereof. The confluence core may be a very important converter located at the end of the discharge port of the plastic extruder, which transports the material from a twin-screw double hole discharge port to a single hole discharge port and enters the mold. In some embodiments, the co-extrusion extruder may be a dry free exhaust extruder. The co-extrusion extruder in some embodiments of the present disclosure may be an existing co-extrusion extruder on the market, which may be not repeated here.

In some embodiments, a vacuum degree and a temperature distribution of the extruder barrel on the co-extrusion extruder may have effects on the performance of the prepared substrate. In some embodiments, the extruder barrel of the co-extrusion extruder may include five temperature areas and a confluence core. Set temperature ranges of the five temperature areas and the confluence core may reduce in sequence. For example, the set temperature ranges of five temperature areas and the confluence core may be set as shown in following table:

| extruder barrel | first area | second area | third area | fourth area | fifth area | confluence core |
|---|---|---|---|---|---|---|
| set temperature/ °C | 215 ± 10 | 210 ± 10 | 205 ± 10 | 200 ± 10 | 195 ± 10 | 185 ± 10 |

As the surface moisture needs to be removed during the processing of the PETG resin to prevent hydrolysis reaction and reduce performance index of the product, the PETG resin may be dried during operation. The common drying method may be electric blast drying and vacuum drum drying. The processing control of which is complex and takes a long time (4-6 hours). In some embodiments, the co-extrusion extruder may employ a non-drying exhaust extruder. The core vacuum system of the non-drying exhaust extruder may be changed from a roots water ring pump to a roots rotary vane pump, which may make the vacuum degree higher. In some embodiments, the vacuum degree of the extruder barrel of the co-extrusion extruder may range from 0.1 MPa to 0.2 MPa.

In some embodiments, the mold on the co-extrusion extruder may include a left side plate and a right side plate arranged in sequence. Both the left side plate and the right side plate may include five temperature areas arranged in sequence. The set temperature ranges of the five temperature areas may be not identical. The set temperature ranges of the left side plate and the right side plate may be the same. For example, the setting of the temperature areas of the mold may be shown in the table below:

| mold | mold 1 | mold 2 | mold 3 | mold 4 | mold 5 | left side plate |
|---|---|---|---|---|---|---|
| set temperature/°C | 185 ± 10 | 182 ± 10 | 180 ± 10 | 180 ± 10 | 185 ± 10 | 185 ± 10 |
| mold | mold 6 | mold 7 | mold 8 | mold 9 | mold 10 | right side plate |
| temperature/°C | 185 ± 10 | 182 ± 10 | 180 ± 10 | 180 ± 10 | 185 ± 10 | 185 ± 10 |

As shown in the above table, the left side plate includes five temperature areas: mold 1, mold 2, mold 3, mold 4, and mold 5, and the right side plate includes five temperature areas: mold 6, mold 7, mold 8, mold 9, and mold 10.

In some embodiments, the manufacturing method for obtaining the substrate through the co-extrusion extruder may include: putting the first charge mixture into the main extruder of the co-extrusion extruder, plasticizing and extruding the first structural layer to at least one channel of the upper channel and lower channel of the distributor, putting the second charge mixture into the auxiliary extruder of the co-extrusion extruder, and plasticizing and extruding the second structural layer to the middle channel of the distributor, so as to form a multi-layer structure in the distributor, and then the multi-layer structure enters the mold for extension to obtain a two-layer or a three-layer substrate.

Step 440: a substrate layer may be obtained by calendering the substrate and fixing a thickness of the substrate based on a calendering roll.

The calendering roll refers to a device that uses a roller to apply a pressure to a material to produce a texture. For example, the calendering roll may include four rolls, five rolls, six rolls, or the like.

In some embodiments, the calendering roll may be four rolls. The set temperature range of the first three rolls of the four rolls may be 130 °C±20 °C, and the set temperature range of the last roll of the four rolls may be 25 °C± 3 °C.

In some embodiments, the substrate layer may be obtained after the substrate being transported to the calendering roller for calendering the substrate and fixing the thickness of the substrate.

In some embodiments, the substrate layer may be processed by the following four different embodiments to obtain a composite decorative board including the PETG resin. Specifically, the four different embodiments may be as follows.
Example 1: the composite decorative board including the PETG resin may be obtained through bonding the substrate layer with the decorative layer and the silent layer and rolling the texture for one-time by the embossing roller.
Example 2: the composite decorative board including the PETG resin may be obtained by sanding the substrate layer and fixing the thickness of the substrate, rolling and coating glue to bond with bamboo skin/wood skin/melamine impregnated paper, and cold pressing. Specifically, the process parameter of the bamboo skin/wood skin/melamine impregnated paper compounded with the substrate layer may be as follows:

| | pressure of cold pressing/(MPa/cm²) | temperature of cold pressing/°C | time of cold pressing/h | coating amount of glue of substrate/(g/m²) |
|---|---|---|---|---|
| process requirements | 1.5 | 25-30 | 6 | 150±20 |

Example 3: the composite decorative board including the PETG resin may be obtained through cutting a continuous 3D printing composite layer, which is formed by transporting the substrate layer to a 3D printer.
Example 4: the composite decorative board including the PETG resin may be obtained by only preprocessing the raw material of the second structural layer. The processing may include: transporting the preprocessed raw material of the second structural layer into the co-extrusion extruder to obtain the substrate, and calendering the substrate and fixing a thickness of the substrate based on the calendering roll to obtain the substrate layer, then, compounding the balance layer on the back of the substrate layer, compounding the decorative layer on the front of the substrate layer, and rolling the texture for one-time by the embossing roller.

The preparation process of an exemplary composite decorative board including the PETG resin may include:
Step 1: obtaining a first charge mixture by adding the raw material of the two first structural layers into the high-speed mixer according to the proportion for mixing evenly, after the temperature rises to 120 °C by mixing, transporting the mixed raw material into the low-speed mixer for cooling to 50 °C, and then putting them into the discharge tank.
Step 2: obtaining a second charge mixture by adding the raw material of the second structural layer into the high-speed mixer according to the proportion for mixing evenly, after the temperature rises to 120 °C by mixing, transporting the mixed raw material into the low-speed mixer for cooling to 50 °C, and then putting the mixed raw material into the discharge tank.
Step 3: obtaining the extruded substrate by putting the first charge mixture into the main extruder through the feeder for plasticization and extrusion, putting the second charge mixture into the auxiliary extruder through the feeder for plasticization and extrusion, plasticizing and extruding the first charge mixture into the distributor to extrude the elastic layer and balance layer, plasticizing and extruding the second charge mixture into the distributor to extrude the rigid layer, and putting the material into the mold for extension molding.
Step 4: obtaining the composite decorative board including the PETG resin by the substrate entering the calendering roll group for calendering and fixing the thickness and then fitting with the color film layer and wear-resistant layer, and rolling the texture for one-time by the embossing roller.

The preparation process of an exemplary composite decorative board including the PETG resin may include:
Step 1: obtaining the first charge mixture by adding the raw material of the two first structural layers into the high-speed mixer according to the proportion for mixing evenly, after the temperature rises to 120 °C by mixing, transporting the mixed raw material into the low-speed mixer for cooling to 50 °C, and then putting the mixed raw material into the discharge tank.
Step 2: obtaining the second charge mixture by adding the raw material of the second structural layer into the high-speed mixer according to the proportion for mixed evenly, after the temperature rises to 120 °C by mixing, transporting the mixed raw material into the low-speed mixer for cooling to 50 °C, and then putting the mixed raw material into the discharge tank.
Step 3: obtaining the extruded substrate by putting the first charge mixture into the main extruder through the feeder for plasticization and extrusion, putting the second charge mixture into the auxiliary extruder through the feeder for plasticization and extrusion, plasticizing and extruding the first charge mixture into the distributor to extrude the elastic layer and balance layer, plasticizing and extruding the second charge mixture into the distributor to extrude the rigid layer, and putting the material into the mold for extension molding.
Step 4: obtaining the substrate of the PETG resin by the substrate entering the calendering roll group for calendering and fixing the thickness, cooling, and finalization.
Step 5: obtaining the composite decorative board including the PETG resin by sanding the substrate of the PETG resin and fixing the thickness of the substrate, rolling and coating glue to bond with bamboo skin/wood skin/melamine impregnated paper, and cold pressing forming.

The preparation process of an exemplary composite decorative board including the PETG resin may include:
Step 1: obtaining the second charge mixture by adding the raw material of the second structural layer into the high-speed mixer according to the proportion for mixing evenly, after the temperature rises to 120 °C by mixing, transporting the mixed raw material into the low-speed mixer to cool to 50 °C, and then putting the mixed raw material into the discharge tank.
Step 2: obtaining the extruded substrate by putting the second charge mixture into the extruder through the feeder for plasticization and extrusion, and plasticizing and extruding the second charge mixture into the rigid layer and entering the mold for extension molding.
Step 3: obtaining the composite decorative board including the PETG resin by the extruded substrate entering the calendering roll group for calendering and fixing the thickness, then compounding the balance layer on the back of the substrate and the color film layer, compounding the wear-resistant layer on the front of the substrate, and rolling the texture for one-time by the embossing roller.

The preparation process of an exemplary composite decorative board including the PETG resin may include:
Step 1: obtaining the first charge mixture by adding the raw material of the two first structural layers into the high-speed mixer according to the proportion for mixing evenly, after the temperature rises to 120 °C by mixing, transporting the material into the low-speed mixer for cooling to 50 °C, and then putting the mixed charge mixture into the discharge tank.
Step 2: obtaining the second charge mixture by adding the raw material of the second structural layer into the high-speed mixer according to the proportion for mixing evenly, after the temperature rises to 120 °C by mixing, transporting the material into the low-speed mixer for cooling to 50 °C, and then putting the mixed raw material into the discharge tank.
Step 3: obtaining the extruded substrate by putting the first charge mixture into the main extruder through the feeder for plasticization and extrusion, putting the second charge mixture into the auxiliary extruder through the feeder for plasticization and extrusion, plasticizing and extruding the first charge mixture into the distributor to extrude the elastic layer and balance layer, plasticizing and extruding the second charge mixture into the distributor to extrude the rigid layer, and transporting the material to the mold for extension molding.
Step 4: obtaining the substrate of the PETG resin by the substrate entering the calendering roll group for calendering and fixing the thickness, and cold pressing forming.
Step 5: obtaining the composite decorative board including the PETG resin by cutting a continuous 3D printing composite layer formed by the substrate of the PETG resin entering the 3D printer for 3D printing.

In some embodiments, different ingredients of the composite decorative board 100 may have different effects on the performance of the composite decorative board 100. Specifically, the performance test results of the composite decorative board including the PETG resin and PVC floor processed according to the above four different embodiments may be reflected.

In the embodiment, the performance test results may include a size change rate at 80 °C, a warpage, a wheelchair test, a sunlight simulation test (thermal deformation), formaldehyde emission, fire rating, and cold resistance obtained based on the test standard. The size change rate at 80 °C refers to the size change degree of the object when it recovers to 23 °C±2 °C after being heated at 80 °C for 6 hours. The warpage refers to a degree of bending or folding of the surface of the composite decorative board. The wheelchair test refers to automatically stopping the machine to observe the change of a sample and evaluate the wear resistance of the sample after completion of accumulated test times for passing through the sample surface of the composite decorative board by repeatedly direction changing, starting and stopping through a caster of a preset specification under the conditions of preset rotation speed, preset load, and preset motion track, which is usually expressed by a count of rotations of the caster through the surface of the sample. The sunlight simulation test (thermal deformation) means laying a composite decorative board with a preset area, heating the surface of the composite decorative board for 3 h by using an infrared heater, then observing whether the surface of the composite decorative board changes using a direct light source and an indirect light source. When the surface of the composite decorative board has no change, a corresponding temperature being used as the test result. The cold resistance refers to the degree of size shrinkage or expansion (size change rate) of the composite decorative board when it recovers to 12 h after 6 hours under a preset low-temperature environment. The formaldehyde emission refers to an amount of the formaldehyde release of the composite decorative board under a preset condition. The test standard refers to a preset test standard for testing the sunlight simulation test (thermal deformation) or the cold resistance of the composite decorative board. In some embodiments, the preset test standard may be set by those skilled in the art according to experience. In some embodiments, the test standard for the size change rate at 80 °C and the warpage may be the test standard of IS02399. The test standard for the wheelchair may be the test standard of IS04918, the test standard for the formaldehyde emission may be the test standard of EN717-1. The test standard for the fire rating may be test standard of EN13501-1.

The performance test results of the composite decorative board including the PETG resin and PVC floor processed according to the above four different embodiments are as follows:

| test item | test standard | composite decorative board including PETG resin | | | | PVC floor |
|---|---|---|---|---|---|---|
| | | example 1 | example 2 | example 3 | example 4 | comparison |
| size change rate at 80 °C | IS02399 | 0.04% | 0.15% | 0.05% | 0.03% | 0.15% |
| warpage | IS02399 | 0.10 mm | 0.40 mm | 0.3 mm | 0.1 mm | 0.8 mm |
| wheelchair test | IS04918 | 25000 r | 25000 r | 25000 r | 25000 r | 20000 r |
| sunlight simulation test (thermal deformation) | preset test standard | 70 °C | 70 °C | 70 °C | 70 °C | 45 °C |
| formaldehyde emission | EN717-1 | ND | ND | ND | ND | ND |
| fire rating | EN13501-1 | Bfl | Bfl | Bfl | Bfl | Bfl |
| cold resistance | preset test standard | 0.02% | 0.08% | 0.01% | 0.02% | 0.12% |

ND in the above table represents that no formaldehyde is tested. According to the above performance test results, a highly filled composite decorative board with the PETG resin as the carrier has better heat and cold resistance than a highly filled floor with PVC as the carrier.

In some embodiments, when the composite decorative board 100 extruded according to the production process includes two first structural layers and a second structural layer, different vacuum degrees selected for each first structural layer (101 or 103) and the second structural layer 102 in the production process may have different effects on the performance of the composite decorative board 100. Specifically, specific effects of the vacuum degree selected in the extrusion molding on the performance of the composite decorative board 100 may be reflected by the following groups of performance test results.

In this embodiment, the performance test results may include the static bending strength and the breaking displacement of the composite decorative board 100 obtained based on the test standard of the composite decorative board 100, and the peel strength between the substrate layer and the decorative layer in the composite decorative board 100 obtained based on the test standard of the peel strength of the adhesive (ASTM D903). The static bending strength refers to the pressure strength that the composite decorative board can bear when it is bent to fracture. The breaking displacement refers to a displacement value of the composite decorative board during the whole process from bending to fracturing. The peel strength between the substrate layer and the decorative layer refers to the maximum tensile force between the substrate layer and the decorative layer without delamination under the action of an external force. The test standard refers to the preset test standard used to test the static bending strength or the breaking displacement of the composite decorative board. In some embodiments, the test standard may be set by those skilled in the art based on experience.

In the groups of experiments, each group of material used to produce the two first structural layers (101, 103) and the second structural layer 102 in the composite decorative board 100 may be set to be the same. The weight of each first structural layer may be set as 104.7 parts by weight, and the weight of the second structural layer may be set as 108 parts by weight. For example, the material for producing each first structural layer (101 or 103) are set as 31 parts by weight of the PETG resin, 61 parts by weight of the inorganic filler, 1 part by weight of the lubricating dispersant, 0.4 parts by weight of the release agent, 1 part by weight of the toughening agent, 0.3 parts by weight of the compatibilizer, and 10 parts by weight of the flame retardant. The material for producing the second structural layer 102 are set as 13 parts by weight of the PETG resin, 77 parts by weight of the inorganic filler, 3 parts by weight of the lubricating dispersant, 1.0 parts by weight of the release agent, 2 parts by weight of the toughening agent, 2 parts by weight of the compatibilizer, and 10 parts by weight of the flame retardant. Meanwhile, the conditions for producing each group of two first structural layers (101, 103) and a second structural layer 102 are set that only the vacuum degrees used for extrusion molding are different as follows.
Example 1: the vacuum degrees used for extruding two first structural layers (101 and 103) and a second structural layer 102 may be set as 0.05 MPa.
Example 2: the vacuum degrees used for extruding two first structural layers (101 and 103) and a second structural layer 102 may be set as 0.1 MPa.
Example 3: the vacuum degree used for extruding two first structural layers (101 and 103) and a second structural layer 102 may be set as 0.15 MPa.

Finally, when the thickness of the composite decorative board 100 of each example is 4.0 mm, the test results of the static bending strength, the breaking displacement, and the peel strength between the substrate layer and the decorative layer of the composite decorative board 100 obtained using the above three embodiments with different vacuum degrees are as follows:

| test item | test standard | composite decorative board of the present disclosure (thickness of 4.0 mm) | | |
|---|---|---|---|---|
| | | example 1 | example 2 | example 3 |
| static bending strength | preset test standard | 156 N | 201 N | 211 N |
| breaking displacement | preset test standard | 3.8 mm | 7.0 mm | 8.5 mm |
| peel strength between substrate layer and | ASTM D903 | 15N/25mm | 40N/25mm | 70N/25mm |
| decorative layer | | | | |

According to the above performance test results, the higher the vacuum degree is, the better the performance index of the composite decorative board is, the prepared composite decorative board 100 performs superior in the static bending strength, the breaking displacement, and the peel strength between the substrate layer and the decorative layer by setting the vacuum degree as 0.15 MPa during extrusion molding. In some embodiments, the selected vacuum degree may be not smaller than 0.1 MPa to prevent the performance of the produced composite decorative board from failing to meet the design standard. The selected vacuum degree may be not greater than 0.2 MPa to prevent small pieces of a material from being pumped away and prevent the vacuum degree from being greater than the vacuum degree that the device can bear.

It should be noted that the descriptions about the process 400 is only for example and illustration, which does not limit the scope of the present disclosure. For those skilled in the art, various modifications and changes may be made to the process 400 under the guidance of the present disclosure. However, these corrections and changes are still within the scope of the present disclosure. For example, steps 410 and 420 may be performed simultaneously.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure and are within the spirit and scope of the exemplary embodiments of this disclosure.

Moreover, certain terminology has been used to describe embodiments of the present disclosure. For example, the terms "one embodiment," "an embodiment," and "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures, or characteristics may be combined as suitable in one or more embodiments of the present disclosure.

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be various useful embodiments of the disclosure, it is to be understood that such detail is solely for that purpose and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

In some embodiments, the numbers expressing quantities, properties, and so forth, used to describe and claim certain embodiments of the application are to be understood as being modified in some instances by the term "about," "approximate," or "substantially." For example, "about," "approximate," or "substantially" may indicate ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

Each of the patents, patent applications, publications of patent applications, and other material, such as articles, books, specifications, publications, documents, things, and/or the like, referenced herein is hereby incorporated herein by this reference in its entirety for all purposes, History application documents that are inconsistent or conflictive with the contents of the present specification are excluded, as well as documents (currently or subsequently appended to the present specification) limiting the broadest scope of the claims of the present specification. By way of example, should there be any inconsistency or conflict between the description, definition, and/or the use of a term associated with any of the incorporated material and that associated with the present document, the description, definition, and/or the use of the term in the present document shall prevail.

In closing, it is to be understood that the embodiments of the application disclosed herein are illustrative of the principles of the embodiments of the application. Other modifications that may be employed may be within the scope of the application. Thus, by way of example, but not of limitation, alternative configurations of the embodiments of the application may be utilized in accordance with the teachings herein. Accordingly, embodiments of the present application are not limited to that precisely as shown and described.

## Claims

1. A composite decorative board, comprising a substrate layer, the substrate layer including at least one first structural layer and a second structural layer, wherein
the at least one first structural layer is connected to the second structural layer up and down, and ingredients of the at least one first structural layer or the second structural layer include poly(ethylene terephthalateco-1,4-cyclohexylenedimethylene terephthalate) (PETG) resin, wherein a weight of the PETG resin of each first structural layer in the at least one first structural layer is greater than a weight of the PETG resin of the second structural layer.

2. The composite decorative board of claim 1, wherein
the at least one first structural layer includes a first structural layer, and the ingredients of the first structural layer include 70-80 parts by weight of the PETG resin based on 103.1-133.5 parts by weight of the first structural layer; and
the ingredients of the second structural layer include 13-18 parts by weight of the PETG resin based on 86.9-113 parts by weight of the second structural layer.

3. The composite decorative board of claim 2, wherein
a thickness of the first structural layer is within a range of 0.10 millimeters-0.30 millimeters; and
a thickness of the second structural layer is within a range of 3 millimeters -8 millimeters.

4. The composite decorative board of claim 1, wherein
the at least one first structural layer includes two first structural layers, and the second structural layer is located between the two first structural layers;
the ingredients of each first structural layer include 18-31 parts by weight of the PETG resin based on 103.1-133.5 parts by weight of each first structural layer; and
the ingredients of the second structural layer include 13-18 parts by weight of the PETG resin based on 86.9-113 parts by weight of the second structural layer.

5. The composite decorative board of claim 4, wherein
the two first structural layers include a first structural layer (101) and a first structural layer (103);
a thickness of the first structural layer (101) is within a range of 0.8 millimeters -1.5 millimeters;
a thickness of the first structural layer (103) is within a range of 1.2 millimeters -2.0 millimeters; and
a thickness of the second structural layer is within a range of 3 millimeters -8 millimeters.

6. The composite decorative board of any one of claims 2-5, further comprising a decorative layer, wherein the second structural layer is located between the decorative layer and one first structural layer of the at least one first structural layer.

7. The composite decorative board of any one of claims 1-6, wherein a viscosity of the PETG resin is within a range of 0.85 dL/g±0.015 dL/g.

8. The composite decorative board of any one of claims 1-7, wherein
the ingredients of the PETG resin include carboxyl-terminus, diethylene glycol, and water;
a content of the terminal carboxyl group in the PETG resin is less than or equal to 35 mol/ton;
a content of the diethylene glycol in the PETG resin is less than or equal to 1%; and
a content of the water in the PETG resin is less than or equal to 0.4%.

9. The composite decorative board of any one of claims 1-8, wherein the ingredients of the at least one first structural layer or the second structural layer further include a compatibilizer.

10. A method for manufacturing a composite decorative board, comprising:
preprocessing a raw material of a first structural layer;
preprocessing a raw material of a second structural layer;
obtaining a substrate by extruding the preprocessed raw material of the first structural layer and the preprocessed raw material of the second structural layer through a co-extrusion extruder; and
obtaining a substrate layer by calendering the substrate and determining a thickness of the substrate based on a calendering roller.

11. The method of claim 10, wherein the raw material of the first structural layer or the raw material of the second structural layer includes poly(ethylene terephthalateco-1,4-cyclohexylenedimethylene terephthalate) (PETG) resin, and a weight of the PETG resin of the first structural layer is greater than a weight of the PETG resin of the second structural layer.

12. The method of claim 11, wherein
the raw material of the first structural layer includes 70-80 parts by weight of the PETG resin based on 103.1-133.5 parts by weight of the first structural layer; and
the raw material of the second structural layer includes 13-18 parts by weight of the PETG resin based on 86.9-113 parts by weight of the second structural layer.

13. The method of any one of claims 10-12, wherein
a thickness of the first structural layer is within a range of 0.10 millimeters-0.30 millimeters; and
a thickness of the second structural layer is within a range of 3 millimeters -8 millimeters.

14. The method of any one of claims 11-13, wherein
ingredients of the PETG resin include carboxyl-terminus, diethylene glycol, and water;
a content of the terminal carboxyl group in the PETG resin is less than or equal to 35 mol/ton;
a content of the diethylene glycol in the PETG resin is less than or equal to 1%; and
a content of the water in the PETG resin is less than or equal to 0.4%.

15. The method of any one of claims 10-14, wherein
the raw material of the first structural layer or the raw material of the second structural layer further includes a compatibilizer.
